# EUROPÄISCHE PATENTANMELDUNG

(11) **EP 1 498 029 A2**
(43) Veröffentlichungstag der Anmeldung: **19.01.2005**
(21) Anmeldenummer: 04016705.8
(22) Anmeldetag: 15.07.2004
(51) Int. Cl.: A01K 5/02

(54) **Vorrichtung zur Flüssigfütterung von Nutztieren, insbesondere Schweinen**

(30) Priorität: 17.07.2003 DE 10332391
(71) Anmelder: Big Dutchman Pig Equipment GmbH, 49377 Vechta (DE)
(72) Erfinder: Lüers, Helmut, 49377 Vechta/Deindrup (DE); Meerpohl, Bernd, 49377 Vechta/Langförden (DE)
(74) Vertreter: Jabbusch, Matthias, Dipl.-Ing.

(57) **Zusammenfassung**

Eine Vorrichtung zur Flüssigfütterung von Nutztieren, insbesondere Schweinen, weist eine Mischstation auf, in welcher ihr eingegebene Futterkomponenten, insbesondere flüssige und feste Futterkomponenten, zu einem fließfähigen, möglichst homogenen Flüssigfutter gemischt werden. Mit einer Fördereinrichtung, umfassend Fördermittel und wenigstens eine Flüssigfutterleitung (3), die von einem Auslaß der Mischstation zu einer Abgabestelle für Flüssigfutter verläuft, wird das Flüssigfutter verteilt und ausdosiert. Zumindest ein vorbestimmter Abschnitt (2) der Flüssigfutterleitung ist mit wenigstens einem das durch den Abschnitt fließende Flüssigfutter durchmischenden Verwirbelungsorgan (12) ausgerüstet. Der vorbestimmte Abschnitt (2) ist als zwischensetzbares Leitungstück (1) der Flüssigfutterleitung ausgebildet, in das ein vorzugsweise als Wendelkörper vorliegendes Verwirbelungsorgan eingesetzt ist.

## Beschreibung

Die Erfindung bezieht sich auf eine Vorrichtung zur Flüssigfütterung von Nutztieren, insbesondere Schweinen, mit einer Mischstation, in welcher ihr eingegebene Futterkomponenten, insbesondere flüssige und feste Futterkomponenten, zu einem fließfähigen, möglichst homogenen Flüssigfutter gemischt werden, und mit einer Fördereinrichtung, umfassend Fördermittel und wenigstens eine Flüssigfutterleitung, die von einem Auslaß der Mischstation zu einer Abgabestelle für Flüssigfutter verläuft.

Flüssigfutter setzt sich zusammen aus mehreren, zur Verfütterung an Nutztiere, insbesondere Schweine, geeigneten Futterkomponenten, sowohl flüssigen, wie z.B. Wasser, Molke, Schlempen, als auch festen Trockenkomponenten, wie Getreideschrot, Sojaschrot, Mineralstoffen.

Diese Komponenten werden dosiert in einen Mischbehälter der Mischstation gegeben und miteinander vermischt. Zumeist weist jeder Mischbehälter einer Mischstation ein Rührwerk oder dergleichen mechanisches Hilfsmittel auf, das für eine Homogenisirung der Mischung aus den vorbezeichneten Komponenten sorgt, so daß das angemischte Flüssigfutter schließlich am Auslaß der Mischstation als fließfähige Suspension zur Entnahme und Transportierung zu bestimmten Abgabestellen bereit steht.

Es ist üblich, Flüssigfütterungsanlagen mit Förder-einrichtungen auszurüsten, mit denen das in der Mischstation, bereitgestellte Flüssigfutter zu den Stellen, an den eine Ausfütterung an die Nutztiere erfolgen soll, transportiert werden kann.

Bekannte Fördereinrichtungen umfassen Fördermittel, z.B. Pumpen oder dergleichen Druckerzeuger, und Flüssig-futterleitungen, durch die das zu verfütternde Flüssigfutter, z.B. von den Pumpen, zu den einzelnen Abgabestellen gedrückt und gegebenenfalls dort ausdosiert werden kann.

Sobald das Flüssigfutter in die Flüssigfutterleitung, zumeist ein Rohrstrang aus Rohren von etwa 50 bis 65 mm lichter Weite und einer Länge zwischen etwa 50 und 500 Metern, gedrückt ist, existiert eine Homogenisierung durch mechanische Einwirkung, z.B. das Rührwerk der Mischstation, nicht mehr. Allein die Strömungsgeschwindigkeit und auch Strömungsumlenkungen durch Rohrbogen und Rohrwinkel im Rohrstrang der Flüssigfutterleitung reichen nicht aus, um das Flüssigfutter in seiner ursprünglichen, im Mischbehälter erzielten Homogenität zu halten.

Darüber hinaus können sich Feststoffpartikel in der Flüssigfutterleitung absetzen, so daß es zur Bildung von Sedimenten im aus den Flüssigfutterleitungen der Flüssigfütterungsanlage bestehenden Rohrleitungssystem kommen kann.

Bei niedrigen Strömungsgeschwindigkeiten kommt es zu Entmischungen, wobei sich die schweren Feststoffteilchen der Flüssigfutter- Suspension ablagern, während gleichzeitig die flüssige Phase, vorrangig Wasser, Molke oder dergleichen, über die abgelagerten Feststoffteilchen hinwegströmt.

Diese Problematik tritt dann auch noch verstärkt auf, wenn die Vorrichtung zur Flüssigfütterung den Transport des Flüssigfutters in der Flüssigfutterleitung aus Verfahrensgründen unterbricht, wodurch das Flüssigfutter in der Flüssigfutterleitung in einen Ruhezustand gerät.

Dies erfolgt z. B. immer dann, wenn ein sogenanntes Restlosfütterverfahren durchgeführt wird. Dabei wird nur die Futtermenge in der Mischstation angemischt, die auch tatsächlich ausgefüttert werden soll. Ist diese Futtermenge aus der Mischstation komplett entnommen und bereits in die Flüssigfutterleitung gedrückt, ist die in der Flüssigfutterleitung befindliche Menge Flüssigfutter noch nachzudrücken und an den vorbestimmten Abgabestellen auszudosieren. Dazu wird eine vorbestimmte Menge Wasser in die Flüssigfutterleitung nachgedrückt, welche dann das Flüssigfutter vor sich her schiebt und an den verbleibenden Futterabgabestellen ausdosiert. An den Futterabgabestellen entsteht verfahrensbedingt eine kurze Pause, bei der das Futter dann in der Flüssigfutterleitung zum Ruhestand kommen kann. Beim erneuten Anschieben des Flüssigfutters durch nachdrückendes Wasser kommt es dann häufig vor, daß die flüssige Phase über die abgesetzten

Feststoffteilchen hinweg geschoben wird. Dadurch erhalten die nachfolgend versorgten Abgabestellen nicht die gewünscht Futterzusammenstellung, sondern voranging nur noch die flüssige Phase des Flüssigfutters. Diese nachteilige Versorgung tritt vor allem bei den letzten Abgabestellen einer Flüssigfutterleitung auf und ist in seiner Ausprägung umso deutlicher, je länger die Flüssigfutterleitung, je größer die lichte Weite ihres Rohrstranges ist, je unstabiler die Suspension des Flüssigfutters und je niedriger die Strömungsgeschwindigkeit in der Flüssigfutterleitung ist.

Um dies zu vermeiden, ist es bekannt, Trennkörper, sogenannte Molche einzusetzen, die zwischen dem Flüssigfutter und dem Schiebemedium Wasser plaziert werden. Ohne derartige Trennkörper würden einzelne Abgabestellen nicht mit der benötigten, vorbestimmten Menge der im Flüssigfutter enthaltenden Feststoffkomponente versorgt. Es kann zu daraus resultierenden Fehlversorgungen von Nutztieren, insbesondere Schweinen, mit Flüssigfutter unzureichender Zusammensetzung und Feststoffgehalt kommen und zu dadurch bedingten erheblichen Leistungseinbußen bis hin zu Fehlernährungen, die sich schließlich auf die Produktivität der Nutztierhaltung negativ auswirkt.

Der Einsatz solcher Trennkörper erfordert jedoch zusätzliche Maßnahmen verfahrenstechnischer und konstruktiver Art und Weise. So ist es z. B. erforderlich, Schleusen für das Ein- und Aussetzen der Trennkörper in die Flüssigfutterleitung vorzusehen und auch bei der Steuerung des Verfahrensablaufes durch entsprechende Programmierung zu berücksichtigen.

Das eigentliche Problem der Entmischung der Suspension des in der Mischstation angemischten Flüssigfutters können aber auch solche eingesetzten Trennkörper nicht beseitigen. Gegebenenfalls schiebt nämlich der Trennkörper einen Pfropfen aus Feststoffteilchen vor sich her, der wiederum die flüssige Phase vorschiebt. An einer geöffneten Abgabestelle könnte somit zunächst ausschließlich flüssige Phase ausdosiert werden und erst an der nächsten Abgabestelle würde dann ausschließlich ein Brei ausdosiert, der hauptsächlich aus Feststoffteilchen besteht, die der Trennkörper von der Innenwand der Flüssigfutterleitung abgeschabt hat und nunmehr vor sich herschiebt.

Der Erfindung liegt die Aufgabe zugrunde, eine Vorrichtung zur Flüssigfütterung der Eingangs bezeichneten Gattung so auszugestalten, das an sämtlichen Abgabestellen für Flüssigfutter eine gleichmäßigere Zusammensetzung des ausdosierten Flüssigfutters hinsichtlich fester und flüssiger Futterkomponenten erreicht wird.

Diese Aufgabe ist durch die Merkmale des Patentanspruchs 1 gelöst. Weiterbildungen und vorteilhafte Ausgestaltungen der erfindungsgemäßen Lösung ergeben sich aus den Merkmalen der Unteransprüche 2 bis 15.

Erfindungsgemäß ist zumindest ein Abschnitt der Flüssigfutterleitung, und zwar ein an vorbestimmter Stelle in der Flüssigfutterleitung befindlicher Abschnitt, mit einem das durch den Abschnitt fließenden Flüssigfutter durchmischenden Verwirbelungsorgan ausgerüstet. Strömt das Flüssigkeits-Feststoffgemisch, also das Flüssigfutter, durch den Abschnitt mit dem durchmischenden Verwirbelungsorgan, wird das Flüssigfutter wieder homogenisiert und so ein natürlicher Pfropfen aus Flüssigfutter mit gewünschter Konsistenz erzeugt. Dieser Pfropfen wird als Ganzes in der Flüssigfutterleitung vorgeschoben. Folgen mehrere Abschnitte im Verlauf der Flüssigfutterleitung hintereinander in vorbestimmten Abständen, kann das durchfließende Flüssigfutter immer wieder dann neu durchmischt werden, und zwar vom Verbirbelungsorgan, wenn sich in der Flüssigfutterleitung Sedimentationen und Ablagerungen ausbilden, bzw. die Neigung zur Ausbildung besteht.

Mit besonderem Vorteil ist jeder vorbestimmte Abschnitt deshalb als zwischensetzbares Leitungsstück der Flüssigfutterleitung ausgebildet. In eine Flüssigfutterleitung kann ein solcher Abschnitt immer dort in die Flüssigfutterleitung eingebaut werden, wo es verfahrensbedingt zu Grenzschichten bzw. Entmischungszonen zwischen den flüssigen Komponenten und Feststoff-Komponenten des Flüssigfutters kommen kann.

Die vorbeschriebenen Maßnahmen haben insbesondere auch den Vorteil, daß bereits installierte, d. h. in Betrieb befindliche Vorrichtungen zur Flüssigfütterung problemlos nachgerüstet werden können.

Als Verwirbelungsorgane in den jeweiligen Abschnitten der Flüssigfutterleitung kommen Körper mit entsprechenden Geometrien in Frage, die in der Lage sind, das durch den Abschnitt fließende Flüssigfutter so zu durchmischen, daß sich beim Weiterschieben des Flüssigfutters ein homogenisierter Pfropf ausgebildet hat.

Durch Vorbestimmung der Abstände zwischen den einzelnen Abschnitten kann erreicht werden, das auch die Abgabestellen, die von der Mischstation und ihren Fördermitteln entfernt sind, ein Flüssigfutter erhalten, das dem ursprünglichen Flüssigfutter-Gemisch, welches in der Mischstation angesetzt wurde, entspricht.

Es hat sich gezeigt, daß als zwischensetzbare Leitungsstücke ausgebildete Abschnitte jeweils in Abständen von etwa 50 bis über 100 Metern in die Flüssigfutterleitung eingebaut werden können, um zu gewährleisten, daß an jeder Abgabestelle für Flüssigfutter die vorbestimmte Mischung auch ausdosiert werden kann.

Als Verwirbelungskörper können in jeden Abschnitt, Gitter, Blenden, Propeller oder der gleichen, feststehende Körper aber auch selbst oder fremd angetriebene Rotationskörper eingebaut werden. Mit besonderem Vorteil ist bei der erfindungsgemäßen Vorrichtung das Verwirbelungsorgan als in den freien Querschnitt des Abschnittes der Flüssigfutterleitung ragendes Leit- bzw. Ablenkelement ausgebildet. Als Ablenkelement ist z. B. auch eine Düse geeignet. Die Verwirbelungsorgane können in den als zwischensetzbares Leitungsstück ausgebildeten Abschnitt einbaubar sein. Es ist jedoch auch möglich, Verwirbelungsorgane von vornherein in ein zwischensetzbares Leitungsstück zu integrieren, beispielsweise dadurch, daß das Leitungsstück aus Kunststoff hergestellt wird und an seiner Innenwandung entsprechende Ausformungen bzw. Anformungen erhält.

Bei einer konstruktiv besonders einfach zu gestaltenden Ausführung ist das Verwirbelungsorgan ein aus einem Flachband gebildeter Wendelkörper. Der Außendurchmesser des Wendelkörpers entspricht etwa dem Innendurchmesser des Abschnitts der Flüssigfutterleitung so das der Wendelkörper ein in den Abschnitt einschiebbares Teil ist. Dieses Teil kann lose im Abschnitt sitzen, also noch Spiel haben. Es ist jedoch auch möglich das Teil im Abschnitt zu befestigen bzw. zu verspannen. Es hat sich gezeigt, daß ein Wendelkörper besonders wirkungsvoll ist, wenn die Steigung der Wendel etwa gleich dem Innendurchmesser des Abschnitts der Flüssigfutterleitung ist.

Mit besonderem Vorteil ist jedes Verwirbelungsorgan im Abschnitt der Flüssigfutterleitung beweglich gegenüber dem Abschnitt angeordnet. Ein bewegliches Verwirbelungsorgan verbessert gegebenenfalls die Durchmischungswirkung.

Dabei kann jedes Verwirbelungsorgan mittels eines externen Antriebs in Rotation und/oder in oszillierende Bewegungen versetzt werden.

Um zu vermeiden, daß in einem Leitungsstück beweglich befindliche Verwirbelungsorgane von dem fließenden Flüssigfutter mitgeführt werden, ist jeder als Leitungsstück vorliegender Abschnitt und jedes darin befindliche Verwirbelungsorgan mit wenigstens einem Positionierelement ausgerüstet, wobei die Positionierelmente, gegenseitig in Wirkverbindung stehen. Jedes Positonierelement kann ein Anschlag für das Verwirbelungsorgan sein, der z. B. als ein in dem als Leitungsstück vorliegendem Abschnitt angeordneter Innenkragen ausgebildet ist.

Ein solcher Innenkragen kann insbesondere zur Halterung und Führung lose in das Leitungsstück eingeschobener Wendelkörper dienen.

Mit besonderem Vorteil ist jeder Abschnitt endseitig mit Rohrverbindungselementen ausgerüstet. Solche Rohrverbindungselemente ermöglichen es, eine bereits installierte, also eine in Betrieb befindliche Flüssigfutterleitung einfach aufzuschneiden und mit einem entsprechend zwischengesetzten Abschnitt mit darin befindlichem Verwirbelungkörper nachzurüsten.

Als Rohrverbindungselemente kommen übliche Muffen, aber auch Kragenflansche, oder Verschraubungen in Frage.

Selbstverständlich könnten Rohrverbindungen auch durch Verschweißen oder Kleben hergestellt werden. Insbesondere dadurch, daß Flüssigfutterleitungen zumeist aus Kunststoff bestehen, sind geklebte oder geschweißte Nachrüstungen in kürzester Zeit möglich.

Die Verwirbelungsorgane selbst sind z. B. aus nahrungsmitteltechnisch unbedenklichem Chrom-Nickel-Stahl herge-stellt. Es ist jedoch auch möglich, als Werkstoff für ein Verwirbelungsorgan Kunststoff aber auch Keramik zu verwenden. Insbesondere bei einem beweglich ausgebildeten Verwirbelungsorgan ist es möglich, eine einfache Antriebstechnik für das Verwirbelungsorgan dadurch zu verwirklichen, daß insbesondere im Bereich der Peripherie des Verwirbelungsorgans aus Kunststoff, auf Magnetkräfte ansprechende Teilchen eingelagert werden. Sind am als Leitungsstück vorliegenden Abschnitt, in dem sich ein solches Verwirbelungsorgan befindet, Drehfelder erzeugende Spulen angeordnet, kann das Verwirbelungsorgan in Rotation, und zwar mit Vorteil in gesteuerte Rotation, versetzt werden.

Ein Ausführungsbeispiel der Erfindung, aus dem sich weitere erfinderische Merkmale ergeben, ist in der Zeichnung dargestellt. Es zeigen:
- Fig. 1: einen Abschnitt einer Flüssigfütterungsleitung im Längsschnitt
- Fig. 2: einer Ansicht eines Bereiches einer Flüssigfütterungsleitung mit zwischensetzbarem, als Leitungsstück ausgebildeten Abschnitt.

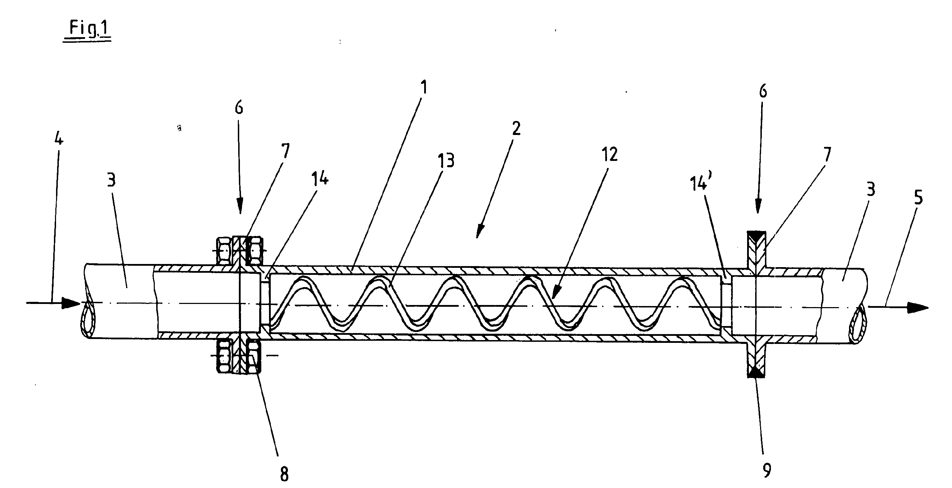

Fig. 1 zeigt einen Längsschnitt einer Flüssigfutterleitung im Bereich eines als zwischensetzbares Leitungsstück 1 vorliegenden Abschnittes 2 einer Flüssigfutterleitung 3. Über die Flüssigfutterleitung 3, die hier als Rohrleitung vorliegt, wird Flüssigfutter in Richtung des Pfeils 4 von einer nicht weiter dargestellten Mischstation herangeführt, durchströmt dabei den Abschnitt 2 der Flüssigfutterleitung, der hier als Leitungsstück 1 vorliegt und fließt weiter in Richtung des Pfeils 5.

Der Abschnitt 2 der Flüssigfütterungsleitung 3 ist hier als zwischensetzbares Leitungsstück 1 ausgebildet, indem er an seinen Enden Rohrverbindungselemente 6 in Form von Kragenflanschen 7 aufweist.

In Fig. 1 sind zwei Alternativen der Kragenflansche dargestellt. Links sind die Kragenflansche 7 durch Verschraubungen 8 miteinander verspannt. Rechts sind die Kragenflansche durch an der Perepherie angebrachte Schweißnähte 9 verbunden.

Selbstverständlich ist auch eine Klebeverbindung der stirnseitigen Flächen der Kragenflansche möglich.

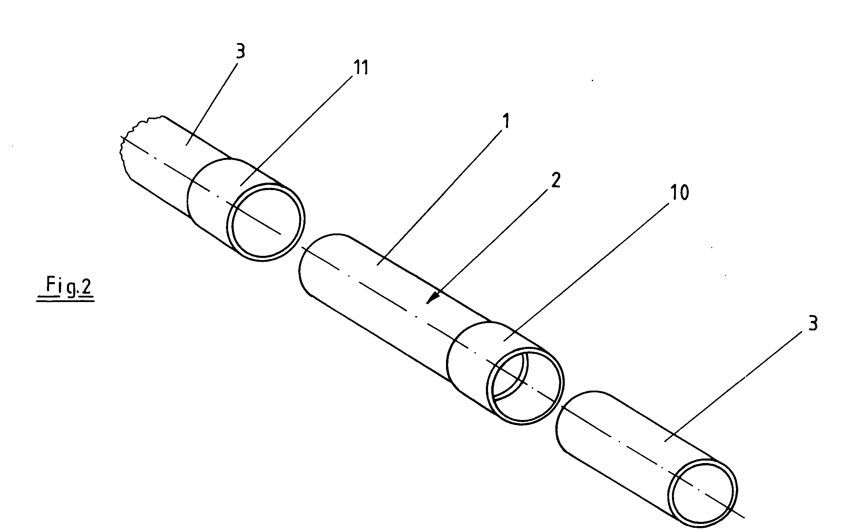

Eine weitere Ausgestaltung einer Verbindung eines zwischengesetzten Abschnitts mit den zueinander fluchtenden Enden der Flüssigfutterleitung 3 ist in Fig. 2 dargestellt.

Dort sind Steckhülsen angegeben, die als separat angebrachte Bauteile 10 und 11 ausgebildet sein können oder auch als Aufweitungen der Enden der Flüssigfutterleitung 3 bzw. des Abschnitts 2.

Jeder Abschnitt 2, der in Form eines zwischensetzbaren Leitungsstückes 1 vorliegt, ist mit einem das durch den Abschnitt fließende Flüssigfutter durchmischenden Verwirbelungsorgan 12 ausgerüstet, welches, wie in Fig. 1 dargestellt ein aus einem Flachband gebildeter Wendelkörper 13 ist. Das Leitungsstück 1 und jedes darin befindliche Verwirbelungsorgan 12 weisen gegenseitig in Wirkverbindung stehende Positionierelemente auf, wobei jedes Positionierelement bei der in der Fig. 1 dargestellten Ausführung ein Anschlag für das Verwirbelungsorgan ist, der als ein in dem als Leitungsstück 1 vorliegendem Abschnitt 2 angeordneter Innenkragen 14, 14' ausgebildet.

Diese Anordnung hat den Vorteil, das jeder Innenkragen 14, 14' zugleich auch an der Verwirbelung, ebenso wie der Wendelkörper 13, beteiligt ist, da er eine Art Lochblende darstellt, durch die das Flüssigfutter fließt und dabei innerhalb der gebildeten Verengungsstelle verwirbelt wird.

## Patentansprüche

1. Vorrichtung zur Flüssigfütterung von Nutztieren, insbesondere Schweinen, mit einer Mischstation in welcher ihr eingegebenen Futterkomponenten, insbesondere flüssige und feste Futterkomponenten, zu einem fließfähigen, möglichst homogenen Flüssigfutter gemischt werden und mit einer Fördereinrichtung, umfassend Fördermittel und wenigstens eine Flüssigfutterleitung, die von einem Auslaß der Mischstation zu einer Abgabestelle für Flüssigfutter verläuft,
**dadurch gekennzeichnet,**
**daß** zumindest ein vorbestimmter Abschnitt (2) der Flüssigfutterleitung (3) mit wenigstens einem das durch den Abschnitt (2) fließende Flüssigfutter durchmischenden Verwirbelungsorgan (12) ausgerüstet ist.

2. Vorrichtung nach Anspruch 1, **dadurch gekennzeichnet, daß** der vorbestimmte Abschnitt (2) als zwischensetzbares Leitungstück (1) der Flüssigfutterleitung (3) ausgebildet ist.

3. Vorrichtung nach einem der Ansprüche 1 und 2, **dadurch gekennzeichnet, daß** das Verwirbelungsorgan (12) als in den freien Querschnitt des Abschnitts (2) der Flüssigfutterleitung (3) ragendes Leit - bzw. Ablenkelement ausgebildet ist.

4. Vorrichtung nach Anspruch 3, **dadurch gekennzeichnet, daß** das Ablenkelement als Düse ausgebildet ist.

5. Vorrichtung nach einem der Ansprüche 1 bis 3, **dadurch gekennzeichnet, daß** das Verwirbelungsorgan (12) ein aus einem Flachband gebildeter Wendelkörper (13) ist.

6. Vorrichtung nach einem der Ansprüche 1 bis 5, **dadurch gekennzeichnet, daß** jedes Verwirbelungsorgan (12) im Abschnitt (2) der Flüssigfutterleitung (3) beweglich gegenüber dem Abschnitt (2) angeordnet ist.

7. Vorrichtung nach Anspruch 6, **dadurch gekennzeichnet, daß** jedes Verwirbelungsorgan (12) mittels eines externen Antriebs in Rotation versetzbar ist.

8. Vorrichtung nach Anspruch 6 und/oder Anspruch 7, **dadurch gekennzeichnet, daß** jedes Verwirbelungsorgan (12) mittels eines externen Antriebs in oszillierende Bewegung versetzbar ist.

9. Vorrichtung nach einem der vorhergehenden Ansprüche, **dadurch gekennzeichnet, daß** jeder als Leitungsstück (1) vorliegende Abschnitt (2) und jedes darin befindliche Verwirbelungsorgan (12) gegenseitig in Wirkverbindung stehende Positionierelemente aufweisen.

10. Vorrichtung nach Anspruch 9, **dadurch gekennzeichnet, daß** jedes Positionierelement ein Axial-Anschlag für das Verwirbelungsorgan (12) ist, der als ein in dem als Leitungsstück (1) vorliegenden Abschnitt (2) angeordneter Innenkragen (14,14') ausgebildet ist.

11. Vorrichtung nach einem der vorhergehenden Ansprüche, **dadurch gekennzeichnet, daß** jeder Abschnitt (2) endseitig mit Rohrverbindungselementen (6) ausgerüstet ist.

12. Vorrichtung nach Anspruch 11, **dadurch gekennzeichnet, daß** jedes Rohrverbindungselement (6) ein Kragenflansch (7) ist.

13. Vorrichtung nach einem der vorhergehenden Ansprüche, **dadurch gekennzeichnet, daß** der Werkstoff für ein Verwirbelungsorgan (12) Chrom-Nickel-Stahl ist.

14. Vorrichtung noch einem der Ansprüche 1 - 12, **dadurch gekennzeichnet, daß** der Werkstoff für ein Verwirbelungsorgan (12) Kunststoff ist.

15. Vorrichtung nach einem der Ansprüche 13 und 14, **dadurch gekennzeichnet, daß** in den Kunststoff, aus dem ein beweglich ausgebildetes Verwirbelungsorgan (12) besteht, insbesondere im Bereich der Peripherie des Verwirbelungsorgans (12), auf Magnetkräfte ansprechende Teilchen eingelagert sind und daß am als Leitungsstück (1) vorliegenden Abschnitt (2), in dem sich das Verwirbelungsorgan (12) befindet, Drehfelder erzeugende Spulen angeordnet sind.
